# EUROPÄISCHE PATENTANMELDUNG

(11) **EP 1 243 861 A2**
(43) Veröffentlichungstag der Anmeldung: **25.09.2002**
(21) Anmeldenummer: 02005011.8
(22) Anmeldetag: 06.03.2002
(51) Int. Cl.: F24D 3/16

(54) **Aufbau für einen Wärmetauscher**

(30) Priorität: 23.03.2001 DE 20105068 U
(71) Anmelder: Supellex AG, 8500 Frauenfeld (CH)
(72) Erfinder: Bredemann, Rolf, 31275 Lehrte (DE)
(74) Vertreter: Stenger, Watzke & Ring Patentanwälte

(57) **Zusammenfassung**

Um einen bekannten Aufbau für einen Wärmetauscher zur Anbringung an einer Raumdecke mit mindestens einem von einer Wärmemedium durchströmbaren Wärmetauscherplatte so weiterzuentwickeln, daß dieser optisch ansprechend gestaltet ist und daß er auf einfache Weise in bereits bestehende Gebäude nachgerüstet werden kann, wird mit der Erfindung vorgeschlagen, daß bei einem Aufbau für einen Wärmetauscher (1) an der Raumdecke (2) mindestens ein Installationskanal (11) angeordnet ist, in dem Vorlaufleitungen (9) und/oder Rücklaufleitungen (10) für das Wärmemedium geführt sind, wobei die Vor- und Rücklaufleitungen (9, 10) mit Anschlüssen versehen sind zum Verbinden mit korrespondierenden Anschlußstücken der mindestens einen Wärmetauscherplatte (3).

## Beschreibung

Die Erfindung betrifft einen Aufbau für einen Wärmetauscher zur Anbringung an einer Raumdecke mit mindestens einem von einer Wärmemedium durchströmbaren Wärmetauscherplatte.

Derartige Wärmetauscher finden beispielsweise als Deckenstrahlplatten-Heizungen Verwendung.

Deckenstrahlheizungen, auch Deckenstrahlplatten-Heizungen genannt, sind im Stand der Technik bekannt. Derartige Heizungen sind aus einer Vielzahl von unterhalb einer Raumdecke angeordneten Deckenstrahlplattenelementen aufgebaut, welche jeweils über mehrere, von einem Heizmedium durchströmbare Rohre verfügen, welche in ihren Endbereich über Verteiler bzw. Sammler mit einer zentralen Vorlaufleitung bzw. einer zentralen Rücklaufleitung verbindbar sind. Derartige Heizungsaufbauten dienen zur Beheizung eines Raumes mittels Wärmestrahlung von der Decke her. Ein Vorteil derartiger Anordnungen liegt darin, daß eine platzraubende Anbringung von Heizkörpern an den Wänden nicht erforderlich ist. Statt dessen können die Raumwände auf andere Weise genutzt werden. Beispielsweise können in Lagergebäuden die Raumwände vollständig mit Lagerregalen oder ähnlichen Einrichtungen versehen werden; die für den Raum erforderliche Heizleistung wird von der unter der Raumdecke abgehängten Deckenstrahlheizung erbracht.

Deckenstrahlplatten-Heizungen sind über mindestens eine Vorlaufleitung sowie mindestens eine Rücklaufleitung mit einem Zentralheizungssystem verbunden, wobei in der Vorlaufleitung das zur Wärmeabgabe vorerwärmte Wärmemedium der Deckenstrahlheizung zugeführt wird und das nach der Wärmeabgabe erkaltete Wärmemedium in der Rücklaufleitung einer zentralen Wärmeerzeugungseinheit wieder zurückgeführt wird. Zu diesem Zwecke sind in den über Deckenstrahlheizungen beheizten Räumen entsprechende Vorlaufleitungen bzw. Rücklaufleitungen zu verlegen und an die Deckenstrahlheizung anzuschließen. Zum Führen der Vor- bzw. Rücklaufleitungen sind im Stand der Technik zwei grundsätzliche Möglichkeiten bekannt. Einerseits werden bei entsprechenden Deckenstrahlheizungen die Versorgungsleitungen, also Vorlaufleitung sowie Rücklaufleitung, auf Putz, also optisch freiliegend, den Deckenstrahlplattenelementen zugeführt. Diese Art der Leitungsführung hat den Vorteil, daß sie kostengünstig zu errichten und bei Bedarf einfach instandzuhalten ist. Jedoch werden auf Putz geführte Heizleitungen vermehrt als aus ästhetischer Sicht störend empfunden.

Eine zweite Möglichkeit der Anordnung der Vorlaufleitungen bzw. Rücklaufleitungen für Deckenstrahlheizungen besteht darin, diese unter Putz zu verlegen. Hierbei werden bereits im Rohbauzustand die entsprechenden Leitungen verlegt, bevor der abschließende Putz auf Wände und Decken aufgebracht wird, und anschließend wird beim Verputzen der Innenwände bzw. der Decken auch der Bereich, in dem die Heizungsrohre verlegt sind, mit verputzt. Aus der Putzschicht treten nur noch die Anschlußstücke der entsprechenden Leitungen hervor, mit denen dann dazu korrespondierende Anschlüsse der Deckenstrahlheizung bzw. der einzelnen Deckenstrahlplatten verbunden werden. Zwar bleiben bei einer solchen Führung der Leitungen diese den Blicken der Betrachter verborgen, stören also nicht den optischen Eindruck des Deckenstrahlheizungsaufbaus, jedoch sind eventuell erforderliche Wartungsarbeiten an den Vorlaufleitungen bzw. Rücklaufleitungen mit einem sehr hohen Aufwand verbunden. Zudem ist es nicht ohne erhöhten Aufwand möglich, eine bestehende Räumlichkeit mit einer Deckenstrahlheizung nachzurüsten. Hierzu muß zum Verlegen der Leitungen der Putz aufgestemmt, die Leitungen verlegt und der Putz wieder erneuert werden. Ein solches Vorgehen ist aufwendig und erzeugt hohe Kosten.

Für die beschriebenen Deckenstrahlplattenheizungen ist es möglich, diese anstelle mit einem als Heizmedium ausgelegten erwärmten Wärmemedium mit einem als Kühlmedium ausgelegten Wärmemedium zu beschicken. Dabei wird die Anordnung über den Vorlauf ein abgekühltes Kühlmedium zugeführt, welches der Kühlung der Raumluft dient. Die Deckenstrahlplatten nehmen dann über Konvektion bzw. über Strahlung Wärme der Raumluft auf und kühlen diese.

Ausgehend von diesem Stand der Technik liegt der Erfindung die **Aufgabe** zugrunde, einen bekannten Aufbau für einen Wärmetauscher der eingangs genannten Art unter Vermeidung der Nachteile des Standes der Technik so weiterzuentwickeln, daß dieser optisch ansprechend gestaltet ist und daß er auf einfache Weise in bereits bestehende Gebäude nachgerüstet werden kann.

Zur **Lösung** dieser Aufgabe wird mit der Erfindung vorgeschlagen, daß bei einem Aufbau für einen Wärmetauscher der eingangs genannten Art an der Raumdecke mindestens ein Installationskanal angeordnet ist, in dem Vorlaufleitungen und/oder Rücklaufleitungen für das Wärmemedium geführt sind, wobei die Vor- und Rücklaufleitungen mit Anschlüssen versehen sind zum Verbinden mit korrespondierenden Anschlußstücken der mindestens einen Wärmetauscherplatte.

Die erfindungsgemäß zur Führung der Leitungen für das Wärmemedium vorgesehenen Kanäle bilden eine einfache Möglichkeit, die in den Kanälen geführten Rohrleitungen, die Vorlauf- und Rücklaufleitungen für den Wärmetauscher, optisch zu verblenden. Die Ausgestaltung der erfindungsgemäßen Installationskanäle kann dabei auch unter gestalterischen Gesichtspunkten erfolgen, so daß ein insgesamt ansprechendes Design des Wärmetauschers erzielt wird. So können die Installationskanäle insbesondere hinsichtlich ihrer Formgebung an die Form der Wärmetauscherplatten angepaßt werden, so daß ein optisch ansprechender Gesamteindruck des Wärmetauschers entsteht.

Die erfindungsgemäßen Installationskanäle können dabei in der Raumdecke aufgenommen sein, also vor dem Verputzen angebracht und nach dem Verputzen in der Raumdecke integriert sein, sie können jedoch auch auf der Decke aufgesetzt an dieser befestigt sein. Diese zweite Möglichkeit bildet insbesondere hinsichtlich der Nachrüstung bereits bestehender Räume mit einem erfindungsgemäßen Wärmetauscher eine einfache und kostengünstige Möglichkeit der ästhetisch ansprechenden Nachrüstung. Die Installationskanäle werden einfach an der bestehenden Decke beispielsweise durch Verschrauben befestigt und die Leitungen für das Wärmemedium werden in den Installationskanälen geführt. Auf diese Weise bleiben die Leitungen für einen Betrachter verborgen und der dermaßen aufgebaute Wärmetauscher wirkt optisch ansprechend. Arbeiten am Putz der Decke sind nicht erforderlich.

Um die in den erfindungsgemäß vorgesehenen Installationskanälen verlaufenden Rohre abschließend zu verblenden wird gemäß einer vorteilhaften Weiterbildung der Erfindung vorgeschlagen, daß die Installationskanäle Abdeckungen aufweisen. Um die Anschlüsse der Vor- bzw. Rücklaufleitungen zur Verbindung mit korrespondierenden Anschlußstücken der Wärmetauscherplatten freizuhalten, können entweder in diesem Bereich keine Abdeckungen vorgesehen sein oder die Abdeckung weist in diesem Bereich entsprechende Durchtrittsöffnungen auf.

Um einen ästhetisch ansprechenden und insgesamt kompakten Aufbau des Wärmetauschers zu erreichen, werden gemäß weiterer vorteilhafter Weiterbildungen der Erfindung verschiedene Anordnungsmöglichkeiten vorgeschlagen. Zum einen wird vorgeschlagen, die Installationskanäle auf der Decke aufgesetzt parallel in einem der Breite der Wärmetauscherplatten entsprechenden Abstand parallel zu führen und die Wärmetauscherplatten zwischen den Kanälen anzuordnen. Auf diese Weise läßt sich ein sehr kompakter, ästhetisch ansprechender Aufbau eines Wärmetauschers erzielen. Die entsprechenden Anschlußstücke zum Verbinden der Wärmetauscherplatten mit den Vor- bzw. Rücklaufleitungen treten in diesem Fall seitlich aus den Installationskanälen, parallel zur Ebene der Raumdecke hervor und werden mit entsprechend an den Stirnseiten der Platten angeordneten Anschlüssen verbunden.

Eine zweite Möglichkeit, die Installationskanäle sowie Wärmetauscherplatten anzuordnen besteht gemäß einer vorteilhaften Weiterbildung der Erfindung darin, Installationskanäle parallel in einem Abstand entlang der Decke zu führen, welcher kleiner ist als die Breite der Wärmetauscherplatten, und die Wärmetauscherplatten auf die Kanäle aufzusetzen. In diesem Falle würden die Anschlüsse der Vorlaufbzw. Rücklaufleitungen zum Verbinden mit den entsprechenden Anschlußstücken der Wärmetauscherplatten im wesentlichen senkrecht zur Deckenebene aus dem Installationskanal vortreten, um dann an die aufgesetzten Wärmetauscherplatten angeschlossen zu werden. Diese Art der Anordnung kann sowohl für auf die Decken aufgesetzte Installationskanäle als auch für in der Decke eingelassene Installationskanäle verwendet werden. Die zuvor geschilderte Anordnung zwischen den Kanälen angeordneter Wärmetauscherplatten eignet sich dahingegen nur für auf die Decke aufgesetzte Installationskanäle.

Gemäß einer weiteren vorteilhaften Weiterbildung der Erfindung ist die Vorlaufleitung über ein Verteilerstück sowohl mit einem ein erwärmtes Wärmemedium führenden Heizkreislauf als auch mit einem ein abgekühltes Wärmemedium führenden Kühlkreislauf verbindbar. Auf diese Weise kann der erfindungsgemäße Wärmetauscher sowohl zum Erwärmen als auch zum Abkühlen des Raumes verwendet werden. Um den Betrieb des Wärmetauschers zum Erwärmen bzw. zum Abkühlen der Raumluft steuern zu können, sind die an das Verteilerstück angeschlossenen Leitungen des Heizkreislaufs bzw. des Kühlkreislaufs vorzugsweise über Ventile schließbar. So lassen sich je nach Bedarf die Leitungen einzeln öffnen bzw. schließen, so daß dem Wärmetauscher entsprechend das Kühlmedium bzw. das Heizmedium als Wärmemedium zugeführt werden kann. Zum Regeln der Kühl- bzw. Heizleistung kann in dem Vorlauf des Wärmetauschers ein den Durchfluß des Wärmemediums regelndes Regelventil vorgesehen sein.

Gemäß einer weiteren, vorteilhaften Weiterbildung der Erfindung sind die Anschlüsse der Vor- bzw. Rücklaufleitungen mit den korrespondierenden Anschlußstücken der Wärmetauscherplatten lösbar verbindbar. Dies erleichtert einerseits die Montage des Wärmetauschers, schafft andererseits aber auch die Möglichkeit, einzelne Wärmetauscherplatten auszutauschen. Aus Gründen der Arbeitserleichterung werden für den Aufbau einer lösbaren Verbindung Schnellverbinderanschlüsse, wie beispielsweise Steckkupplungen, bevorzugt.

Um den erfindungsgemäßen Aufbau für einen Wärmetauscher möglichst multifunktional zu gestalten, wird gemäß einer weiteren vorteilhaften Weiterbildung der Erfindung vorgeschlagen, daß die Installationskanäle zur Aufnahme von weiteren Installationen ausgebildet sind. So können die Installationskanäle neben der Aufnahme der Heizleitungen, der Vorlauf- bzw. Rücklaufleitugen, auch für die Aufnahme von elektrischen Installationsleitungen, Leitungen der Klimainstallation, Leitungen der Wasserinstallation, Datenübertragungsleitungen oder ähnlichen Installationsleitungen ausgebildet sein. Auf diese Weise können die für die Führung der Heizleitungen vorgesehenen Installationskanäle multifunktional genutzt werden, so daß eine Anordnung weiterer Installationskanäle bzw. das Verlegen anderer Installationen auf Putz bzw. unter Putz vermieden werden kann, was den Gesamtaufbau vereinfacht und zur Kostenminimierung beiträgt. Zusätzlich ist es möglich, weitere Elemente in den Wärmetauscheraufbau zu integrieren. So können beispielsweise in den Wärmetauscherplatten Leuchten zur Raumbeleuchtung angeordnet sein, die ihre elektrische Versorgung vorzugsweise über ebenfalls in den Installationskanälen geführte Elektrokabel erhalten.

So kann gemäß einer besonders bevorzugten Variante der Erfindung einer der Installationskanäle sowohl die den Wärmetauscher speisenden Vorlaufleitungen als auch die Rücklaufleitungen zum Abführen des genutzten Wärmemediums aufnehmen, so daß der zweite Installationskanal frei bleibt. Dieser kann dann zum Transport von Raumluft in einem Lüftungssystem verwendet werden. So kann über diesen Kanal beispielsweise frische Zuluft bzw. verbrauchte, dem Raum entnommene Abluft geführt werden. Hiebei kann vorgesehen sein, daß über eine oder mehrere der Wärmetauscherplatten, welche mit Luftdurchtrittsschlitzen versehen sind, dem Raum Zuluft zugeführt wird. Hierzu werden von den die Zuluft führenden Installationskanal Abzweige gelegt, über die die Zuluft in die Bereiche unterhalb der Wärmetauscherplatten geführt und von dort aus an den Raum abgegeben wird. Mit Vorteil kann hierbei erreicht werden, daß die die Wärmetauscherplatten durchtretende Zuluft bereits durch Wechselwirkung mit der Wärmetauscherplatte je nach Betriebsmodus des Wärmetauschers abgekühlt bzw. erwärmt wird. Die Abluft kann dabei dezentral abgeführt werden. Beispielsweise kann sie über einen oberhalb eines Fensters angeordneten Querkanal abgeführt werden, dies kann beispielsweise auch mit einer Gardinen- bzw. Vorhangblende kombiniert bzw. ergänzt werden. Diese Art der Abluftführung hat den Vorteil, daß bei Sonneneinstrahlung bzw. hohen Außentemperaturen die von außen eindringende zusätzliche Wärme aufgrund der Thermik im Raum weitgehend direkt mit der Abluft abgeführt wird, ohne daß es zusätzlichen Einsatzes von Kühlenergie bedarf. Mit Vorteil wird die Zuluft dabei über ein der Außenwand gegenüberliegendes Element, beispielsweise ein Wärmetauscherelement, zugeführt.

In einer alternativen Variante kann der nicht genutzte Installationskanal auch zum Führen der Abluft verwendet werden, wobei der Installationskanal in einen zentralen Sammelkanal mündet, welcher die Abluft beispielsweise entlang von Gebäudefluren führt. Bei dieser Variante kann die dem Raum zuzuführende Zuluft über einen weiteren anzuordnenden Stichkanal in den Bereich unterhalb einer der Wärmetauscherplatten geführt werden. Dieser weist wiederum Luftdurchtrittsschlitze zum Durchlassen der dem Raum zugeführten Zuluft auf. Auch in diesem Falle kann die dem Raum zugeführte Zuluft mittels der Wärmetauscherplatte bereits vorerwärmt bzw. abgekühlt werden.

Die einzelnen quer zu den Installationskanälen verlegten Wärmetauscherplatten können dabei in vorteilhafter Weise zu Reinigungszwecken abklappbar an den Kanälen angeordnet sein. Eine Abklappbarkeit sollte dabei vorzugsweise entlang einer Längskante, also entlang einer quer zu den Kanälen verlaufenden Kante erfolgen.

Mit dem erfindungsgemäßen Wärmetauscher, der auf Installationskanälen angeordnet ist, ist es nicht mehr erforderlich, eine Raumdecke mit Deckenelementen abzuhängen, um eine Installation zu verblenden. Stattdessen bieten die einzelnen Wärmetauscherplatten einen optisch ansprechenden Deckenabschluß, und die Installation ist in den Installationskanälen verborgen, jedoch gut zugänglich.

Weitere Vorteile und Merkmale der Erfindung ergeben sich aus der nachfolgenden Beschreibung eines Ausführungsbeispiels anhand der beigefügten Figuren. Dabei zeigen:
- Figur 1: eine schematische Schnittdarstellung durch einen erfindungsgemäßen Aufbau für einen Wärmetauscher zur Anordnung an einer Raumdecke,
- Figur 2: einen Ausschnitt aus einer entlang der Schnittlinie II-II aus Figur 1 genommenen Schnittdarstellung auf den Aufbau für einen Wärmetauscher,
- Figur 3: eine schematische Schnittdarstellung einer alternativen Ausführungsform eines erfindungsgemäßen Aufbaus für eines Wärmetauschers in einer der Figur 1 vergleichbaren Ansicht,
- Figur 4: ein weiteres alternatives Ausführungsbeispiel für einen Wärmetauscheraufbau der Erfindung,
- Figur 5: ein Ausführungsbeispiel eines Wärmetauschersystems mit integrierter Raumluftführung,
- Figur 6: eine entlang der Schnttlinie VI-VI aus Figur 5 genommene Schnittansicht,
- Figur 7: eine schematische Darstellung eines Wärmetauscheraufbaus mit integrierter Lüftungstechnik mit alternativer Luftführung und
- Figur 8: eine entlang der Linie VIII-VIII in Figur 7 genommene Schnittansicht.

Die Figuren sind schematische Darstellungen. In den Figuren sind gleiche bzw. gleichwirkende Teile mit gleichen Bezugszeichen versehen.

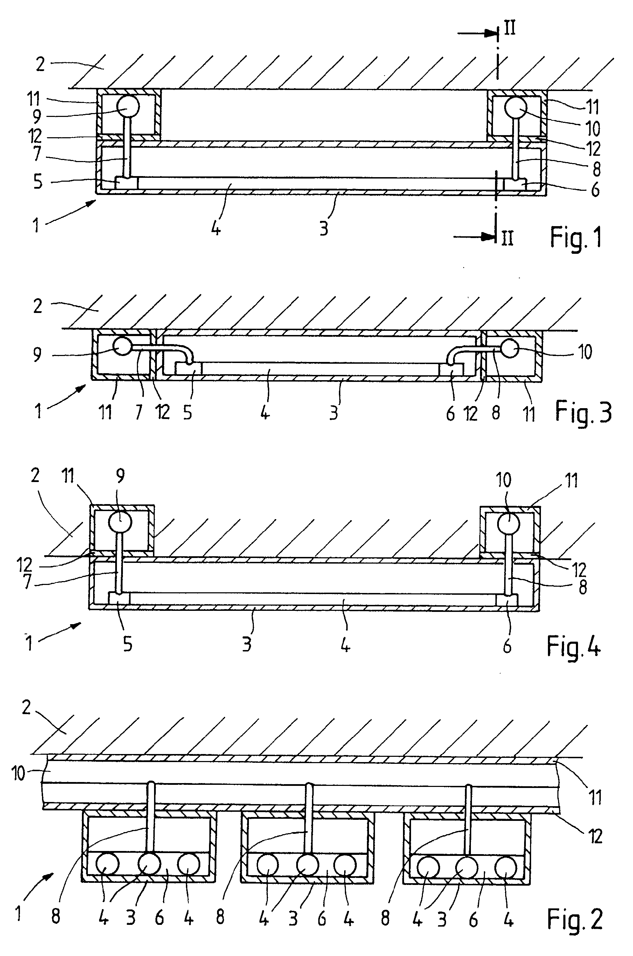

In Figur 1 ist schematisch eine Schnittdarstellung durch einen erfindungsgemäßen Aufbau eines Wärmetauschers 1 zur Anbringung an einer Raumdecke gezeigt. Der Aufbau des Wärmetauschers 1 ist an einer Raumdecke 2 angeordnet. Der Wärmetauscheraufbau 1 weist eine Wärmetauscherplatte 3 auf, in der Wärmetauscherrohre 4 zum Durchführen eines Wärmemediums angeordnet sind.

Die Wärmetauscherrohre 4 sind jeweils stirnseitig mit einem Verteiler 5 bzw. einem Sammler 6 verbunden. Verteiler 5 bzw. Sammler 6 sind über Anschlußleitungsstücke 7 bzw. 8 an eine Vorlaufleitung 9 bzw. eine Rücklaufleitung 10 angeschlossen. Über die Vorlaufleitung 9 wird entweder mittels eines Zentrahlheizungssystems erwärmtes Wärmemedium als Heizmedium dem Wärmetauscher zugeführt; in der Rücklaufleitung 10 fließt dann das erkaltete Heizmedium zurück zum Zentralheizungssystem. Oder dem Wärmetauscher 1 wird über die Vorlaufleitung 9 ein kühles Wärmemedium als Kühlmedium zugeführt, welches nach Aufnahme von Wärme aus der Umgebung über die Rücklaufleitung 10 abgeführt wird. Vorlaufleitung 9 sowie Rücklaufleitung 10 sind jeweils in Installationskanälen geführt. Auf diese Weise sind die Leitungen einerseits vor Einblicken von außen geschützt, sie sind andererseits aber auch leicht zugänglich angeordnet. Die Installationskanäle 11 sind mittels einer Abdeckung 12 verschlossen, welche Durchtrittsöffnungen zum Durchführen der Anschlußleitungsstücke 7 bzw. 8 aufweisen.

In dem in Figur 1 gezeigten Ausführungsbeispiel sind die Installationskanäle 11 auf der Raumdecke 2 aufgesetzt und mit dieser beispielsweise mittels Verschrauben verbunden. Die Installationskanäle 11 sind entlang der Raumdecke 2 parallel geführt. Dabei weisen die beiden äußeren, voneinander abgewandten Seitenflächen der Installationskanäle einen Abstand zueinander auf, der der Breite der Wärmetauscherplatte 3 entspricht. Die Wärmetauscherplatte 3 ist auf die Installationskanäle 11 aufgesetzt und mit diesen lösbar verbunden. Die auf die Installationskanäle 11 aufgesetzte Wärmetauscherplatte 3 schließt mit den Installationskanälen 11 bündig ab. Selbstverständlich kann zur Vermittlung eines ästhetisch ansprechenden Eindrucks die Wärmetauscherplatte von der schematisch dargestellten Kastenform abweichend ausgebildet sein, beispielsweise kann sie optisch gefällige Rundungen aufweisen. Entsprechend der Ausgestaltung der Wärmetauscherplatte 3 können auch die Installationskanäle 11 mit fließenderen Konturen, die sich an die Formgebung der Wärmetauscherplatte 3 anpassen, ausgebildet sein.

Figur 2 zeigt schematisch eine entlang der Schnittlinie II-II genommene Schnittansicht im Ausschnitt, in welcher die Anordnung mehrerer, aneinander angrenzender Wärmetauscherplatten 3 erkannt werden kann. Gut zu erkennen ist, daß die Wärmetauscherplatten 3 mehrere Wärmetauscherrohre 4, im gezeigten Beispiel drei Wärmetauscherrohre 4, aufweist, welche über den Sammler 6 verbunden und über das Anschlußleitungsstück 8 an die Rücklaufleitung 10 angeschlossen sind. Selbstverständlich können die Wärmetauscherplatten 3 mehr als die gezeigten drei Wärmetauscherrohre 4 aufweisen. Auch sind die gezeigten, zwischen den Wärmetauscherplatten 3 eingehaltenen Abstände lediglich schematischer Natur, diese können variiert werden, oder die Wärmetauscherplatten 3 können gegebenenfalls ohne Abstand zueinander nebeneinander angeordnet werden.

In Figuren 3 sowie 4 sind Abwandlungen des in den Figuren 1 sowie 2 gezeigten Ausführungsbeispiels dargestellt. In Figur 3 sind die auf der Raumdecke 2 aufgesetzten Installationskanäle 11 mit einem solchen Abstand zueinander angeordnet, daß eine Wärmetauscherplatte 3 zwischen den Installationskanälen 11 angeordnet werden kann. Die Anschlußleitungsstücke 7 sowie 8 werden in diesem Falle seitlich aus den Installationskanälen 11, parallel zur Raumdecke 2 in Richtung der Wärmetauscherplatte 3 geführt. Ansonsten gleicht der Wärmetauscheraufbau 1 aus Figur 3 im Aufbau und in der Funktion dem in den Figuren 1 sowie 2 gezeigten Ausführungsbeispiel.

In Figur 4 ist ein dem Ausführungsbeispiel gemäß Figur 1 vergleichbares Ausführungsbeispiel gezeigt, mit dem Unterschied, daß hier die Installationskanäle 11 in der Raumdecke 2 versenkt angeordnet sind. Ein derartiger Aufbau des erfindungsgemäßen Wärmetauschers sollte bevorzugt lediglich dann gewählt werden, wenn der Wärmetauscheraufbau 1 bereits bei Erstellung des Gebäudes geplant wird, da dann die Installationskanäle 11 bereits vor Aufbringen einer Putzschicht auf der Raumdecke 2 angeordnet werden können und durch Verputzen mit der Raumdecke 2 abschließen können.

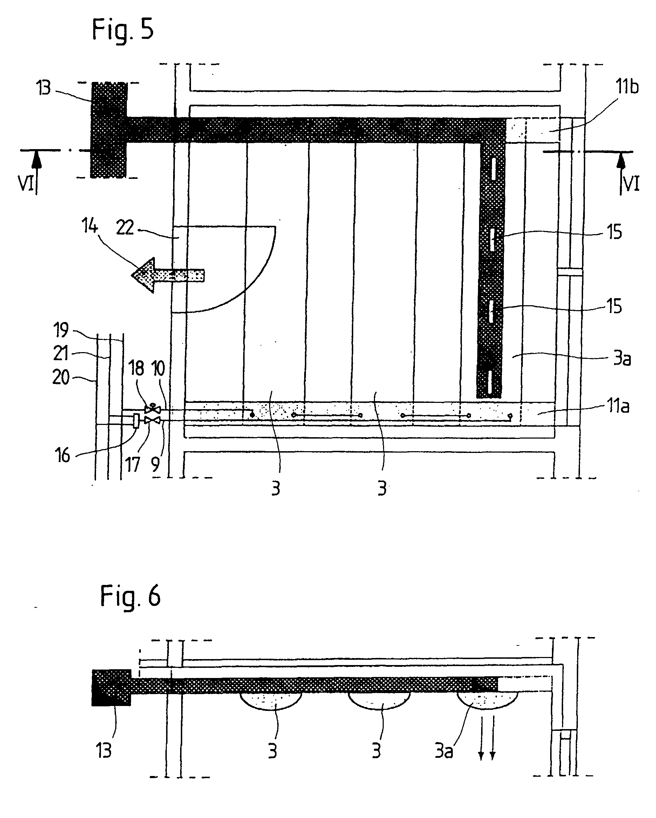

In den Figuren 5 sowie 6 ist ein erstes Beispiel eines Systems gezeigt, bei dem der erfindungsgemäße Wärmetauscher in ein System zur Be- bzw. Entlüftung eines Raumes integriert ist. Bei diesem System sind in einem der Installationskanäle 11a sowohl die Vorlaufleitung 9 als auch die Rücklaufleitungen 10 geführt. Der zweite Installationskanal 11b, auf dem Wärmetauscherplatten 3, 3a aufgesetzt sind, ist frei und wird zur Führung von Zuluft 13 genutzt. Die Zuluft wird zentral zugeführt und über den Installationskanal 11b in einen Bereich der unterhalb mit 3a gekennzeichneten Wärmetauscherplatte verbracht. Die mit 3a gekennzeichnete Wärmetauscherplatte weist Luftdurchtrittsschlitze 15 auf, durch die die Zuluft in den Raum gelangen kann. Beim Transport unterhalb der Wärmetauscherplatte 3a sowie beim Durchtreten durch die Luftdurchtrittsschlitze 15 wird die zugeführte Zuluft 13 je nach Betriebsmodus des Wärmetauschers erwärmt bzw. abgekühlt. Die Abluft 14 wird bei diesem Ausführungsbeispiel dezentral in entsprechende Luftführungen oberhalb des Fensters 22 abgeführt. Den Wärmetauscherplatten 3, 3a kann über ein Verteilerstück 16 aus einem zentralen Heizmediumvorlauf 20 stammendes Heizmedium bzw. aus einem zentralen Kühlmediumvorlauf 21 stammendes Kühlmedium je nach gewünschter Betriebsart zugeführt werden. In dem Verteilerstück 16 ist dabei eine hier nicht dargestellte Ventilschaltung vorgesehen, welche die Vorlaufleitung 9 jeweils bedarfsweise mit dem zentralen Heizmediumvorlauf 20 bzw. dem zentralen Kühlmediumvorlauf 21 verbindet und den jeweils anderen Wärmemediumvorlauf 20 bzw. 21 absperrt. Weiterhin kann in der Vorlaufleitung 9 ein Regelventil 17 erkannt werden, mittels dessen die Heizleistung bzw. Kühlleistung des Wärmetauschers eingestellt werden kann. Die Rücklaufleitung 10 ist über ein Absperrventil 18 mit einem zentralen Rücklauf 19 verbunden.

Bei der in den Figuren 5 sowie 6 gezeigten Variante ist die mit Luftdurchtrittsschlitzen 15 versehene Wärmetauscherplatte 3a an der dem Fenster 22 gegenüberliegenden Innenwand des Raums angeordnet, so daß die Belüftung des Raumes mit Zuluft 13 von dort aus erfolgt. Die Abluft 14 wird oberhalb des Fensters 22 abgeführt, wobei in vorteilhafter Weise durch das Fenster eindringende Wärme, beispielsweise über Sonneneinstrahlung, direkt mit abgeführt wird, so daß es zum Abkühlen des Raums auf die gewünschte Raumtemperatur eines niedrigeren Energieeinsatzes bedarf.

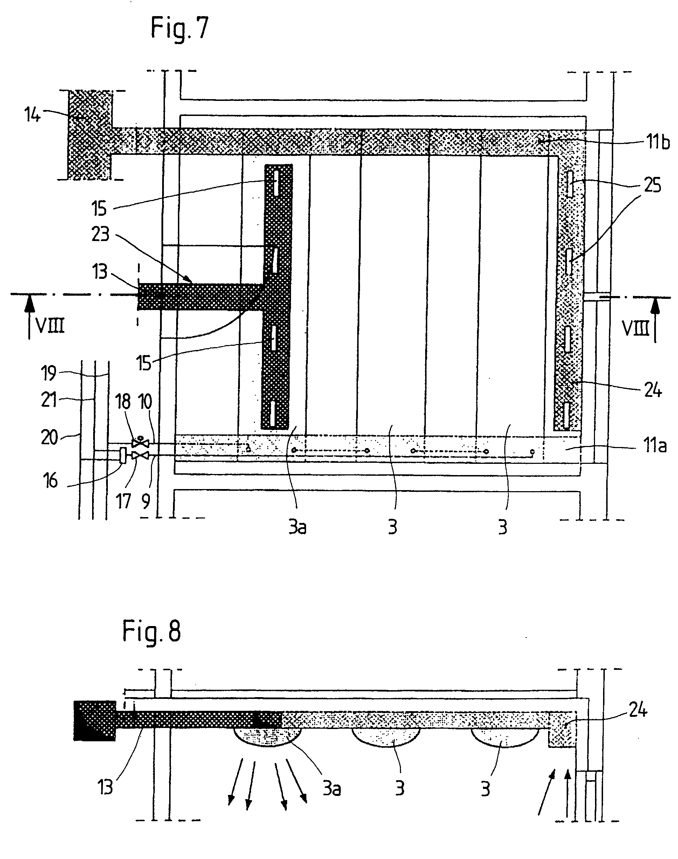

In den Figuren 7 sowie 8 ist eine zweite Variante für die Integration der Raumluftführung in den erfindungsgemäßen Wärmetauscher dargestellt. Analog zu dem vorherigen Ausführungsbeispiel ist in einem ersten Installationskanal 11a die gesamte Installation zur Führung des Wärmemediums untergebracht, nämlich Vorlaufleitung 9 sowie Rücklaufleitung 10. Diese sind in oben beschriebener Weise mit einem zentralen Rücklauf 19, einem zentralen Heizmediumvorlauf 20 sowie einem zentralen Kühlmediumvorlauf 21 verbunden, wobei wiederum ein Verteilerstück 16 vorgesehen ist, welches die Vorlaufleitung 9 wahlweise mit dem zentralen Heizmediumvorlauf 20 oder dem zentralen Kühlmediumvorlauf 22 verbindet. In die Vorlaufleitung 9 ist ein Regelventil 17 integriert, die Rücklaufleitung 10 weist ein Absperrventil 18 auf.

Der zweite, nicht für die Wärmemediumführung genutzte Installationskanal 11b dient in diesem Ausführungsbeispiel der Führung der Abluft. An den Installationskanal 11b ist ein Abluftkanal 24 angeschlossen, welcher Durchtrittsöffnungen 25 aufweist. Die über die Durchtrittsöffnungen 25 in den Abluftkanal 24 aufgenommene Abluft 14 wird über den Installationskanal 11b einem zentralen Abluftsystem zugeführt und beispielsweise über Flure oder andere Gebäudeteile abgeleitet. Die dem Raum zuzuführende Zuluft 13 wird in diesem Ausführungsbeispiel über einen zwischen den Installationskanälen 11a und 11b gelegenen, zentralen Stichkanal 23 zugeführt und durch eine Wärmetauscherplatte 3a, welche wiederum Luftdurchtrittsschlitze 15 aufweist an den Raum abgegeben. Auch bei diesem Ausführungsbeispiel wird in vorteilhafter Weise die Zuluft je nach Betriebsmodus des Wärmetausches bereits vorerwärmt bzw. abgekühlt.

Die in den Figuren 5 bis 8 gezeigten Ausführungsbeispiele für eine Kombination des erfindungsgemäßen Wärmetauschers mit einem Raumluftsystem zeichnen sich durch hohe Wirtschaftlichkeit in Folge von effektivem Einsatz von Energie aus. Darüber hinaus kann das gezeigte System dekorativ gestaltet werden. Die Zahl der Wärmetauscherplatten 3 ist bei diesem System je nach Bedarf frei wählbar, es können bis zur maximalen Aufnahmevermögen der Raumdecke beliebig viele Wärmetauscherplatten 3 entlang der Installationskanäle 11a bzw. 11b angeordnet werden. Mit Vorteil sind die Wärmetauscherplatten 3 bzw. 3a um eine quer zu den Installationskanälen 11a, 11b gelegene Längsachse abklappbar, so daß eine einfache Reinigung bzw. Wartungsarbeiten an den in den Installationskanälen gelegenen Installationen erfolgen kann.

Die gezeigten Ausführungsbeispiele sind lediglich schematischer Natur und sollen ausschließlich der Erläuterungen der Erfindung dienen.

### Bezugszeichenliste

- 1: Wärmetauscheraufbau
- 2: Raumdecke
- 3: Wärmetauscherplatte
- 3a: Wärmetauscherplatte
- 4: Wärmetauscherrohr
- 5: Verteiler
- 6: Sammler
- 7: Anschlußleitungsstück
- 8: Anschlußleitungsstück
- 9: Vorlaufleitung
- 10: Rücklaufleitung
- 11: Installationskanal
- 11a: Installationskanal
- 11b: Installationskanal
- 12: Abdeckung
- 13: Zuluft
- 14: Abluft
- 15: Luftdurchtrittsschlitze
- 16: Verteilerstück
- 17: Regelventil
- 18: Absperrventil
- 19: zentraler Rücklauf
- 20: zentraler Heizmediumvorlauf
- 21: zentraler Kühlmediumvorlauf
- 22: Fenster
- 23: Stichkanal
- 24: Abluftkanal
- 25: Durchtrittsöffnungen

## Patentansprüche

1. Aufbau für einen Wärmetauscher zur Anbringung an einer Raumdecke (2) mit mindestens einer von einem Wärmemedium durchströmbaren Wärmetauscherplatte (3),
**dadurch gekennzeichnet,**
**daß** an der Raumdecke (2) mindestens ein Installationskanal (11) angeordnet ist, in dem Vorlaufleitungen (9) und/oder Rücklaufleitungen (10) für das Wärmemedium geführt sind, wobei die Vor- und Rücklaufleitungen (9, 10) mit Anschlüssen versehen sind zum Verbinden mit korrespondierenden Anschlußstücken der mindestens einen Wärmetauscherplatte (3).

2. Wärmetauscheraufbau nach Anspruch 1, **dadurch gekennzeichnet, daß** die Installationskanäle (11) auf der Raumdecke (2) aufgesetzt an dieser befestigt sind.

3. Wärmetauscheraufbau nach einem der Ansprüche 1 oder 2, **dadurch gekennzeichnet, daß** die Installationskanäle (11) eine die Installationsöffnung verschließende Abdeckung (12) aufweisen.

4. Wärmetauscheraufbau nach einem der Ansprüche 1 bis 3, **dadurch gekennzeichnet, daß** die Installationskanäle (11) unter Belassung eines Zwischenabstandes, der im wesentlichen der Plattenbreite entspricht, parallel über die Raumdecke (2) geführt sind, und daß die Wärmetauscherplatten (3) in den zwischen den Installationskanälen (11) ausgebildeten Raum eingesetzt sind.

5. Wärmetauscheraufbau nach einem der Ansprüche 1 bis 3, **dadurch gekennzeichnet, daß** die Installationskanäle (11) in einem Abstand, welcher geringer ist als die Breite der Wärmetauscherplatten (3), entlang der Decke (2) geführt sind und daß die Wärmetauscherplatten (3) auf die Installationskanäle (11) aufgesetzt sind.

6. Wärmetauscheraufbau nach einem der Ansprüche 1 bis 5, **dadurch gekennzeichnet, daß** die Vorlaufleitung (9) über ein Verteilerstück (16) sowohl mit einem ein erwärmtes Wärmemedium führenden Heizkreislauf als auch mit einem ein abgekühltes Wärmemedium führenden Kühlkreislauf verbindbar ist.

7. Wärmetauscheraufbau nach einem der Ansprüche 1 bis 6, **dadurch gekennzeichnet, daß** die Anschlüsse der Vor- bzw. Rücklaufleitungen (9, 10) mit den korrespondierenden Anschlußstücken der mindestens einen Wärmetauscherplatte (3) lösbar verbindbar sind.

8. Wärmetauscheraufbau nach Anspruch 7, **dadurch gekennzeichnet, daß** die Verbindung zwischen den Anschlüssen der Vor- und Rücklaufleitung (9, 10) und den korrespondierenden Anschlußstücken der mindestens einen Wärmetauscherplatte (3) durch Schnellverbinderanschlüsse ausgeführt ist.

9. Wärmetauscheraufbau nach einem der Ansprüche 1 bis 8, **dadurch gekennzeichnet, daß** die Installationskanäle (11) zur Aufnahme weiterer Installationen ausgebildet sind.

10. Kombination eines Wärmetauscheraufbaus nach einem der Ansprüche 1 bis 9 mit einem Lüftungssystem,
**dadurch gekennzeichnet,**
**daß** einer (11b) der Installationskanäle (11) zur Luftführung ausgebildet ist.

11. Kombination nach Anspruch 10, **dadurch gekennzeichnet, daß** der Installationskanal (11b) an eine Zuluftleitung angeschlossen ist, wobei aus dem Installationskanal (11b) die Zuluft unter mindestens eine der Wärmetauscherplatten (3a) geführt wird, welche zum Durchlassen der Zuluft mit Luftdurchtrittsöffnungen (15) versehen ist.

12. Kombination nach Anspruch 10, **dadurch gekennzeichnet, daß** der Installationskanal (11b) zum Führen von Abluft mit einer zentralen Abluftleitung verbunden ist und in einen an der Decke angeordneten, mit Durchtrittsöffnungen (25) versehenen Abluftkanal (24) mündet.

13. Kombination nach Anspruch 12, **dadurch gekennzeichnet, daß** über einen separaten Stichkanal (23) Zuluft in den Bereich unterhalb einer Wärmetauscherplatte (3a) geführt wird, welche zum Durchlassen der Zuluft Luftdurchtrittsöffnungen (15) aufweist.
